Europäisches Patentamt

European Patent Office

Office européen des brevets

(11) Publication number: **0 292 249**
**A2**

# EUROPEAN PATENT APPLICATION

(21) Application number: **88304476.0**

(22) Date of filing: **18.05.88**

(51) Int. Cl.⁴: **G 07 C 9/00**

(30) Priority: **19.05.87 GB 8711740**
**19.05.87 GB 8711742**

(43) Date of publication of application:
**23.11.88 Bulletin 88/47**

(84) Designated Contracting States:
**AT BE CH DE ES FR GB GR IT LI LU NL SE**

(71) Applicant: **The General Electric Company, p.l.c.**
**1 Stanhope Gate**
**London W1A 1EH (GB)**

(72) Inventor: **Stanford, Christopher John**
**19 Roundwood Lane**
**Harpenden Hertfordshire (GB)**

(74) Representative: **Tolfree, Roger Keith**
**GEC p.l.c. Central Patent Department Chelmsford Office**
**Marconi Research Centre West Hanningfield Road**
**Great Baddow Chelmsford Essex CM2 8HN (GB)**

(54) Data storage systems.

(57) An electronic token, preferably of the "smart card" type is affixed to an article and arranged for contactless coupling with a read/write unit.

In order to overcome the problem of security of paper documents, an electronic token of the type including on-board processing and memory is affixed to the document, and in use the document is placed so that the token couples with an external read/write terminal. Secure information may be accessed from or added to the token only by an authorised person having the correct passwords.

The token may also be provided on passports, cheque books, etc. It may further be provided on a vehicle and used to store licence and tax details, maintenance history and data relating to its owner or driver/operator.

EP 0 292 249 A2

## Description

### Data Storage System

This invention relates to a data storage system, and particularly to a system for the storage of data in a secure form such that the ability to view, change, add or delete data is restricted to certain persons or classes of persons. The invention is particularly, but not exclusively, useful in the identification of firstly secure documents, files, passports, etc. and secondly in the field of motor or other vehicles. Other uses of the invention will be made apparent in the following description.

Paper documents are widely used and may be in the form of many separate documents or sheets kept within a binder or alternatively the documents may be entities in their own right such as passports, pass books, cheque books, etc. They represent a convenient way of storing easily readable and changeable information. However, many of these documents may contain information, the access to which is restricted to authorised persons or the document itself may be used to identify a person and could be in the form of a passport or a pass-book which enables that person access to a bank account. Such documents must be made difficult to forge and must also contain a secure means by which the authorised holder of the document can be uniquely identified. Present methods for identification of a holder involve signatures on the documents, photographs and the like, all of which can be forged by a determined enough person. In the case of document binders to which access may be restricted there may be some information on the file which is less restricted than other information. It is difficult with current systems to allow for selective viewing of a document file without keeping portions of the file physically separate.

Turning now to the field of vehicles, generally motor vehicles but also having relevance to any other types of vehicle, such as boats, bicycles and so on, a great deal of data is often associated with a vehicle and/or its owner or driver/operator.

In order that a motor vehicle may be legally driven upon the public highway the vehicle must have several documents and registrations associated with it and the driver of the vehicle must be licensed. In the United Kingdom such documentation may include proof that the vehicle has been taxed, a certificate of road worthiness (M.O.T. Certificate), vehicle log book details and so on. The driver of the vehicle will require a valid drivers licence and also a certificate of insurance. These and other details can add up to a considerable volume of documents and information, some of which may be held in external computers for accessing by an authorised person wanting to know the ownership details of a particular vehicle.

According to the invention there is provided apparatus for the storage and retrieval of data pertaining to an item, which apparatus includes an electronic token fixed to the item and comprising processing means, memory means and input/output means; and read/write means arranged to interact with the token in a contactless manner to interrogate or change data stored within the token, wherein the token is programmed with data pertaining to the item and/or its user.

The electronic token may be in the form of a small plastics package containing processing, memory and communications circuitry. Such packages are often termed "Smart Cards". The electronic token and read/write means are preferably of the inductive coupling type. An example of such a type is disclosed in United Kingdom patent application no. GB2173623A.

In a first embodiment the apparatus is used for the storage of data pertaining to a paper document and the token is affixed to the document in a position, perhaps within the fly leaf of a document binder, where it can be read by placing the document and reader in respective positions where operative coupling occurs.

The electronic token may be placed in a suitable position on any other documents or articles, non limiting examples of which are further described below as embodiments of the invention:

In a second series of embodiments of the invention the token is placed within or fixed to a vehicle and the read/write unit is placed inside or outside the vehicle at a position where operative coupling is achieved with the token.

Advantageously the token is placed near the windscreen or a window of a motor vehicle, perhaps secreted in the licence disc holder, and the read/write unit is a portable reader positioned outside the car windscreen or window such that coupling occurs through the windscreen or window. The reader may have on-board processing or may be linked to a personal computer or a remote computer.

The electronic token may be in the form of a small plastics package containing processor, memory and communications circuitry and can be placed in any convenient location on or in a vehicle. Alternatively the card may be removable and when removed can be loaded with information pertinent to the vehicle. Whilst in situ the card can be interrogated, through the vehicle windscreen for example by authorities such as the police force. The electronic reader may be portable and/or can be connected to a computer, either remote or in-situ. Alternatively the card can be permanently fixed to the vehicle.

The card can be encoded with any relevant information and may have within it sufficient information to authorise the issuance of a tax disc, currently in the United Kingdom this information comprises proof of a current M.O.T. Certificate and proof that the driver is insured to drive the vehicle. Any additional information related to the vehicle and occupants may also be encoded into the card. Information contained within the token can be held securely and access to it protected by means of passwords and/or secret key crypto-systems of the type commonly known in the art. Several areas of memory may be provided on the token and some of these may hold unalterable data such as vehicle make, registration and model number, whilst other areas could hold alterable data.

The invention need not be limited to motor vehicles and, where required, the electronic token may be associated with any type of vehicle and hold data relevant to the vehicle and/or its owners or occupants. Example of such vehicles are boats, particularly canal boats on busy canals where all the boats tend to look similar, and bicycles where the provision of such a token could not only identify the owners of a stolen bicycle but also deter theft. The invention is also of use in the fields of air travel and rail travel amongst others.

Advantageously, by having a read/write unit associated with the car or other vehicle, the user may be required to enter a PIN (Personal Identification Number) which is checked against the token to verify his or her identity, and only then allows the user to drive the vehicle. Functions such as an individuals preferred seat position, mirror setting and so on may be incorporated, as may sensors which disable the vehicle if the users breath contains more than an allowed amount of alcohol or other intoxicating substance.

Embodiments of the invention will now be described by way of example only.

An electronic token of the type disclosed in the above mentioned United Kingdom published patent application no. GB2173623A, which is incorporated herein by reference, may, in one embodiment of the invention, be embedded unobtrusively into the cover of documents that may for instance have a high intrinsic value financially or for security reasons. The memory of the token may be programmed with any information it is considered pertinent to include and will generally store information to which access is restricted such that the reader not possesing a card or the relevant passwords would not be able to see the information. The information may include some or all of the following, and may, by people having suitable authorisation and knowing suitable passwords and PIN (Personal Identification Number) codes be altered as circumstances or data held within the binder changes. The information may include for example

    1) Document identification
    2) Recipient or owner identification.
    3) Security classification of documents.
    4) Contents lists/file reference.
    5) Abstract.
    6) Issue status/Log of changes.
    7) Publisher/Issuer identification.
    8) Place of origin.
    9) Contents and matter of information restricted to only a portion of the people authorised to inspect the documents.
    10) Variable information loaded as required through life of documents.

In order to access the token with the reader, the user will be required to enter suitable passwords and/or PIN numbers in the usual manner. The intelligence of the processing electronics within the token can be used to permit or deny access to the primary or to varying parts of it dependent upon the user. Varying levels of security with or without authentication may be applied and received or transmitted data may be incripted.

Some examples of other applications of the invention are futher briefly described below.

The electronic token may be secured to a passport where a machine readable version of the visual contents of the passport is maintained securely in the memory. Entry and exit details, visas etc. can be added to the passport and token as it is used.

Passbooks for building societies, banks, allowances etc may include the token where secure identification of genuine passbooks and their usage is required.

Bonds, warrants, securities, legal documents etc. can be verified by the inclusion of apparatus embodying the invention such that genuine originals can be detected.

Classified documents or files can include a token for means of identification, logging changes and storing some information from the body of the file too sensitive to be printed.

The token can be embedded into the cover of a cheque book and replace or supplement the existing cheque guarantee card. The circuitry would perhaps hold a facsimile of the users signature which could only be viewed by an associated terminal after the cheque is signed and a PIN is entered by the cheque presenter. Digitised finger print data, or even voice data could also be used as could other characteristics unique to one person. Authentication of a PIN and authorisation of a transaction can be made by the token. Variable authorisation levels can all be processed by the circuitry within the card in conjunction with the associated terminal or reader.

The token can be affixed suitably to customs documentation, Carnets, Bills of Landing etc. to identify items, value, recipients, etc. Customs clearance can be hastened by interrogating data within the token and details of customs clearance added. The token may be placed on the actual goods being imported/exported.

Other examples may be envisaged within the scope of the present invention.

In embodiments of the invention for vehicle use, the electronic token of the present apparatus may contain some or all of the following information pertinent to the vehicle and its use.

    1. Vehicle licence validity and place of issue.
    2. Current MOT certificate validity and place of issue.
    3. A record of previous MOT certificates.
    4. Current insurance certificate details.
    5. A record of previous insurance details including claims for damage.
    6. Vehicle log book details.
    7. Ownership and or nominated driver information.
    8. Drivers licence details including endorsements.
    9. Record of MOT "scrap" certificates and insurance write off's.
    10. Password(s) relating to vehicle and or driver(s).

11. Vehicle maintenance record.

A few of the uses for the electronic token and read/write means of the invention are as shown below, but it should be noted that many other applications will come within the scope of the present invention.

Vehicle licence purchase, in which all the relevant details of ownership, MOT and insurance would be captured and verified automatically when a new licence is purchased.

Vehicle log book:- a complete history of the vehicle, its ownership and maintenance/vehicle mileage would be held securely in the token. On transfer of ownership the new owner can be sure of the validity of the vehicle history.

Authorised driver identity:- If a vehicle is stopped by the police and details (driving licence, insurance, MOT etc.) are requested, the driver can type into the read/write unit a PIN (Personal Identification Number) or password which is unique to the card, and the unit captures the relevant data from the token if the PIN or password was correct. If the password or PIN is not correct then no data is released and the vehicle driver is suspect.

Vehicle identity:- If the police are suspicious of a parked vehicle then by placing a reader over the licence disc at least some of the contents of the token can be accessed. The officer enters the displayed registration number which is then checked by the token, if the token responds then vehicle ownership details can be recovered. If the token does not respond then the displayed registration number is suspect.

Prevention of rebuilding scrap or written off cars:- when a vehicle is written off or scrapped as a result of an MOT then the token will be endorsed with the details. Subsequently interrogation by the authorities would reveal the endorsement.

## Claims

1. Apparatus for the storage and retrieval of data pertaining to an item, which apparatus includes an electronic token fixed to the item and comprising processing means, memory means and input/output means; and read/write means arranged to interact with the token in a contactless manner to interrogate or change data stored within the token, wherein the token is programmed with data pertaining to the item and/or its user.

2. Apparatus as claimed in claim 1 wherein the electronic token and read/write means are of the inductive coupling type.

3. Apparatus as claimed in claim 1 or claim 2 wherein the item is a document and the token is affixed to the document in a position where it can be read or written to by placing the document and read/write means in respective positions where operative coupling occurs.

4. Apparatus as claimed in claim 3 wherein the data held within the token includes any one or more of the following:

1) Document identification
2) Recipient or owner identification.
3) Security classification of documents.
4) Contents lists/File reference.
5) Abstract.
6) Issue status/Log of changes.
7) Publisher/Issuer identification.
8) Place of origin.
9) Contents and matter of information restricted to only a portion of the people authorised to inspect the documents.
10) Variable information loaded as required through life of documents.

5. Apparatus as claimed in claim 1 or claim 2 wherein, in operation, the electronic token is placed within or fixed to a vehicle and the read/write means is placed inside or outside the vehicle at a position where operative coupling is achieved with the token.

6. Apparatus as claimed in claim 5 wherein the token is placed near the windscreen or window of a motor vehicle such that the read/write unit can be placed outside said windscreen or window in a position where contactless coupling occurs between the contact and read/write unit.

7. Apparatus as claimed in claim 5 or claim 6 wherein the data held within the token includes any one or more of the following:

1. Vehicle licence validity and place of issue.
2. Current MOT certificate validity and place of issue.
3. A record of previous MOT certificates.
4. Current insurance certificate details.
5. A record of previous insurance details including claims for damage.
6. Vehicle log book details.
7. Ownership and or nominated driver information.
8. Drivers licence details including endorsements.
9. Record of MOT "scrap" certificates and insurance write off's.
10. Password(s) relating to vehicle and or driver(s).
11. Vehicle maintenance record.

8. Apparatus as claimed in any preceding claim wherein access to the data in the token can only be obtained after an authorisation procedure has been satisfactorily completed.